Europäisches Patentamt

European Patent Office

Office européen des brevets

(19)

(11) **EP 1 016 872 A1**

## (12) DEMANDE DE BREVET EUROPEEN

(43) Date de publication:
**05.07.2000 Bulletin 2000/27**

(51) Int Cl.$^7$: **G01S 5/16**, G04F 10/00

(21) Numéro de dépôt: **99403301.7**

(22) Date de dépôt: **28.12.1999**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **30.12.1998 FR 9816647**

(71) Demandeur: **COMMISSARIAT A L'ENERGIE ATOMIQUE**
**75752 Paris Cédex 15 (FR)**

(72) Inventeurs:
• **Feraud, Christine**
**38000 Grenoble (FR)**
• **Besesty, Pascal**
**38410 Vaulnaveys le Haut (FR)**

(74) Mandataire: **Signore, Robert et al**
**c/o BREVATOME**
**3, rue du Docteur Lanceraux**
**75008 Paris (FR)**

(54) **Procédé pour déterminer la position d'au moins un émetteur de signaux impulsionnels et dispositif mettant en oeuvre le procédé**

(57) L'invention concerne un procédé pour déterminer la position d'un émetteur de trains d'impulsions successifs de période $T_M$ dans un repère contenant au moins un récepteur. Le procédé comprend :

- l'intégration, à partir d'un instant postérieur à l'instant d'émission d'une première impulsion et pendant une durée Tint inférieure à $T_M$, des signaux électriques issus de la conversion en signal électrique d'impulsions reçues par le récepteur,
- le comptage d'une durée Δtj à partir de l'instant de fin de la durée Tint, si le signal d'intégration est inférieur ou égal à un seuil, et jusqu'à l'instant où le récepteur reçoit l'impulsion qui succède à la première impulsion,
- la détermination de la position de l'émetteur à partir de la position et du secteur de visibilité du récepteur et de la durée Δtj.

FIG. 1

**Description**

Domaine technique et art antérieur

L'invention concerne un procédé pour déterminer la position d'au moins un émetteur de signaux impulsionnels ainsi qu'un dispositif mettant en oeuvre le procédé.

Le procédé selon l'invention s'applique à l'estimation de la position et/ou de l'orientation d'un ou de plusieurs objets. Plus particulièrement, le procédé selon l'invention s'applique à l'estimation de la position et/ou de l'orientation d'un ou de plusieurs objets équipés de microlasers solides monolithiques à déclenchement passif et évoluant dans un environnement observé par des photodétecteurs.

Le problème du positionnement et de la localisation d'objets a été largement étudié dans le domaine des ondes électromagnétiques. Les sources utilisées sont ferromagnétiques et sont excitées par une tension alternative ou pulsée. Or, un circuit parcouru par un courant crée en un point suffisamment éloigné, une perturbation magnétique équivalente à celle d'un dipôle. La localisation, dans ce contexte, passe donc par une étape de détermination du moment magnétique.

En traitement d'antenne, la localisation d'objets s'appuie sur l'exploitation de la différence de phase de signaux collectés par des récepteurs omnidirectionnels alignés.

L'invention concerne un procédé pour déterminer la position $(X_o, Y_o, Z_o)$, dans un repère contenant au moins un récepteur ayant une position $(X_{rj}, Y_{rj}, Z_{rj})$ et un secteur de visibilité $(\theta_{rj}, \phi_{rj}, \vec{\upsilon}_{rj})$, d'au moins un émetteur de trains d'impulsions successifs de période $T_M$, chaque train d'impulsions comprenant au moins une première impulsion, le procédé comprenant :

- l'émission d'un premier train d'impulsions par l'émetteur,
- l'intégration, à partir d'un instant postérieur à l'instant d'émission de la première impulsion du premier train d'impulsions et pendant une durée $T_{int}$ inférieure à $T_M$, des signaux que reçoit le récepteur de façon à générer un signal d'intégration,
- le déclenchement du comptage d'une durée $(\Delta_{tj})$ à partir de l'instant qui détermine la fin de la durée $T_{int}$, si le signal d'intégration a une amplitude inférieure ou égale à un seuil donné,
- l'interruption du comptage de la durée $(\Delta_{tj})$ à l'instant où le récepteur reçoit la première impulsion du train d'impulsions qui succède au premier train d'impulsions,
- la détermination de la position $(X_o, Y_o, Z_o)$ de l'émetteur à partir de la position $(X_{rj}, Y_{rj}, Z_{rj})$ et du secteur de visibilité $(\theta_{rj}, \phi_{rj}, \vec{\upsilon}_{rj})$ du récepteur et de la durée $(\Delta_{tj})$.

L'invention concerne également un dispositif pour déterminer la position $(X_o, Y_o, Z_o)$, dans un repère, d'au moins un émetteur de trains d'impulsions successifs de période $T_M$, chaque train d'impulsions comprenant au moins une première impulsion, le dispositif comprenant :

- au moins un bloc de réception constitué d'un récepteur pour convertir en signal électrique les signaux qu'il reçoit, le récepteur ayant une position $(X_{rj}, Y_{rj}, Z_{rj})$ et un secteur de visibilité $(\theta_{rj}, \phi_{rj}, \vec{\upsilon}_{rj})$ définis dans ledit repère, d'un circuit d'intégration pour intégrer, à partir d'un instant postérieur à l'instant d'émission de la première impulsion du premier train d'impulsions et pendant une durée $T_{int}$ inférieure à $T_M$, les signaux que reçoit le récepteur de façon à générer un signal d'intégration, et d'un circuit de comptage d'une durée, le déclenchement du comptage s'effectuant à l'instant qui détermine la fin de la durée $T_{int}$, si le signal d'intégration à une amplitude inférieure ou égale à un seuil donné et l'interruption du comptage s'effectuant à l'instant où le récepteur reçoit la première impulsion du train d'impulsions qui succède au premier train d'impulsions,
- un dispositif de détermination de position $(X_o, Y_o, Z_o)$ de l'émetteur à partir de la position $(X_{rj}, Y_{rj}, Z_{rj})$ et du secteur de visibilité $(\theta_{rj}, \phi_{rj}, \vec{\upsilon}_{rj})$ du récepteur et de la durée.

L'invention concerne encore un dispositif d'émission de signaux impulsionnels comprenant au moins un émetteur de trains d'impulsions comprenant au moins une première impulsion, l'émetteur de traie d'impulsions étant une source microlaser excitée par un signal de pompe, caractérisé en ce qu'il comprend des moyens pour mesurer la durée qui sépare l'instant où la première impulsion d'un train d'impulsions est émise et l'instant où la source microlaser est excitée par le signal de pompe pour émettre la première impulsion.

Comme cela a été mentionné précédemment, l'invention trouve une application particulièrement avantageuse pour l'estimation de la position et/ou de l'orientation d'un ou plusieurs objets équipés de microlasers solides monolithiques à déclenchement passif et évoluant dans un environnement observé par des photodétecteurs.

Brève description des figures

D'autres caractéristiques et avantages de l'invention apparaîtront à la lecture d'un mode de réalisation préférentiel de l'invention fait en référence aux figures ci-annexées parmi lesquelles :

- la figure 1 représente un dispositif de détermination de position d'au moins un émetteur de signaux impulsionnels selon l'invention,
- la figure 2 représente un dispositif de détermination de position et/ou d'orientation d'au moins un émetteur de signaux impulsionnels selon un premier perfectionnement de l'invention,
- la figure 3 représente des trains d'impulsions successifs émis par un émetteur selon l'invention,
- la figure 4 représente une vue détaillée d'un train d'impulsions émis par un émetteur selon l'invention,
- la figue 5 représente un dispositif pour déterminer le temps écoulé entre l'instant ou un émetteur est sollicité pour l'émission d'une impulsion et l'instant où l'impulsion résultant de la sollicitation est émise.

Sur toutes les figures, les mêmes repères désignent les mêmes éléments.

Description détaillée de modes de mise en oeuvre de l'invention

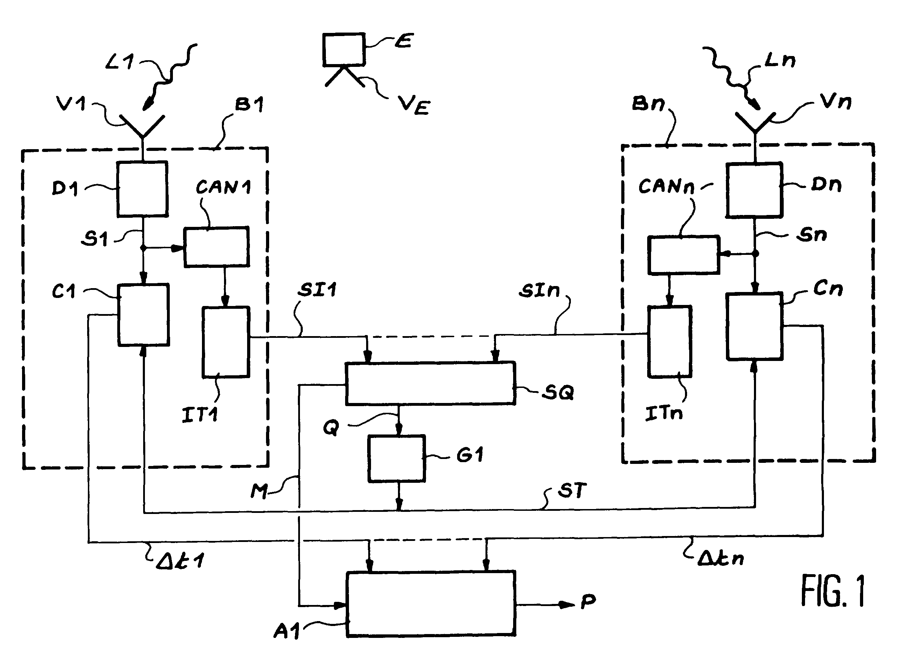

La figure 1 représente un dispositif de détermination de position d'au moins un émetteur de signaux impulsionnels selon l'invention.

Le dispositif comprend un émetteur E de signaux impulsionnels, n blocs de réception $B_1$, ... $B_n$, n étant un entier supérieur ou égal à 1, un séquenceur SQ, un générateur d'impulsions $G_1$ et un dispositif $A_1$ de détermination de position P de l'émetteur E.

Selon le mode de réalisation préférentiel de l'invention, l'émetteur E est une source microlaser émettant des impulsions lumineuses. Chaque bloc de réception $B_j$ (j=1, ..., n) comprend un photodétecteur $D_j$, un circuit de comptage $C_j$, un convertisseur analogique/digital $CAN_j$, et un circuit d'intégration de signal $IT_j$.

Les photodétecteurs sont réalisés, par exemple, à l'aide de diodes PIN ou de diodes à avalanche. Le photodétecteur $D_j$ (j=1, ..., n) collecte la lumière $L_j$ qu'il reçoit et convertit cette lumière $L_j$ en un signal électrique $S_j$.

La position ($X_{rj}$, $Y_{rj}$, $Z_{rj}$) du photodétecteur $D_j$ est connue par rapport à un repère de référence. Le secteur de visibilité $V_j$ du photodétecteur $D_j$ est défini par le vecteur de direction $\vec{v}_{rj}$ de l'angle solide de réception repéré en site et en azimut par les angles $\theta_{rj}$ et $\phi_{rj}$ dans le repère de référence.

Le circuit de comptage $C_j$ (j=1, ..., n) est, par exemple, un circuit de comptage tel que celui décrit dans la demande de brevet français FR-2 745 668 intitulée "Dispositif de mesure précise de la durée d'un intervalle de temps".

Le compteur $C_j$ possède une première entrée pour recevoir un signal qui déclenche le comptage et une deuxième entrée pour recevoir un signal qui interrompt le comptage. La deuxième entrée du compteur $C_j$ est reliée à la sortie du photodétecteur $D_j$. Il s'ensuit que le comptage est interrompu dès que le photodétecteur $D_j$ détecte une impulsion.

Selon le mode de réalisation de la figure 1, un train d'impulsions ne comprend qu'une impulsion. La source microlaser E émet alors un signal lumineux constitué d'impulsions se répétant avec une période $T_M$. Suite à l'émission d'une impulsion par la source microlaser, une première impulsion est détectée par chacun des photodétecteurs $D_j$ (j=1, ..., n) dont le secteur de visibilité $V_j$ est dans le champ de visibilité $V_E$ de la source microlaser. Cette première impulsion correspond à un trajet direct de la lumière entre la source E et chaque photodétecteur $D_j$. En l'absence de nouvelle impulsion émise par la source microlaser, chaque photodétecteur détecte éventuellement des impulsions dues à des trajets multiples de la lumière. Les signaux $S_j$ issus du photodétecteur $D_j$ sont transmis au circuit d'intégration de signal $IT_j$ par l'intermédiaire du circuit de conversion analogique/digital CANA qui a pour fonction de numériser le signal qu'il reçoit. Le circuit d'intégration $IT_j$ a pour fonction de générer un signal d'intégration $SI_j$ résultant de l'intégration, à partir d'un instant postérieur à l'instant d'émission de la première impulsion reçue et pendant une durée d'intégration $T_{int}$ inférieure à $T_M$, de l'ensemble des signaux $S_j$ issus du photodétecteur $D_j$.

L'amplitude du signal d'intégration $SI_j$ est comparée à un seuil. La valeur du seuil est choisie de façon à garantir qu'aucune impulsion de trajet direct ni aucune impulsion de trajets multiples n'est détectée par le photodétecteur $D_j$ pendant la durée $T_{int}$ si le signal d'intégration $SI_j$ a une valeur inférieure au seuil.

Les signaux $SI_j$ (j=1, ..., n) sont transmis au séquenceur SQ. A l'instant qui détermine la fin de la durée d'intégration $T_{int}$, une impulsion de début de comptage ST est envoyée simultanément sur la première entrée de chacun des compteurs $C_j$ si chacun des signaux $SI_j$ a une valeur inférieure au seuil. Dans le cas contraire, les circuits d'intégration sont remis à zéro et l'intégration des signaux recommence pendant une nouvelle durée $T_{int}$. L'impulsion de début de comptage ST est issue d'un générateur d'impulsions $G_1$ qui reçoit sur son entrée une commande Q issue du séquenceur SQ.

Au cas où le séquenceur SQ se trouve éloigné de certains blocs de réception, des liaisons par fils ou par fibres optiques sont nécessaires entre certains blocs de réception et le séquenceur. Les retards liés à la longueur des liaisons sont alors pris en compte pour le calcul de l'instant qui détermine la fin de la durée $T_{int}$.

Comme cela a été mentionné précédemment, le comptage de chaque compteur $C_j$ est interrompu dès que le photodétecteur $D_j$ auquel il est associé détecte une impulsion. Ainsi, chaque compteur $C_j$ peut-il délivrer une durée $\Delta_{tj}$ calculée comme la différence entre l'instant où une impulsion de trajet direct est détectée et l'instant de début de comptage commun à plusieurs compteurs.

Les informations de durée $\Delta_{tj}$ sont transmises au dispositif $A_1$ de détermination de position de l'émetteur E qui reçoit, par ailleurs, une information de mesures prêtes M issue du séquenceur SQ. L'information de mesures prêtes M est envoyée lorsque tous les compteurs ont été arrêtés par l'arrivée d'une impulsion ou ont dépassé un temps de comptage autorisé.

La position P de la source E peut alors être déterminée. Comme cela a été mentionné précédemment, la position $(X_{rj}, Y_{rj}, Z_{rj})$ du photodétecteur $D_j$ est connue par rapport à un repère de référence. Ce repère de référence peut être, par exemple, le repère qui représente la pièce dans laquelle sont placés les différents photodétecteurs. Le secteur de visibilité $V_j$ du photodétecteur $D_j$ défini par le vecteur de direction $\vec{\upsilon}_{rj}$ de l'angle solide de réception repéré en site et en azimut par les angles $\theta_{rj}$ et $\phi_{rj}$ dans le repère de référence est également connu. Les données $X_{rj}, Y_{rj}, Z_{rj}, \theta_{rj}, \phi_{rj}, \vec{\upsilon}_{rj}$ relatives à chaque photodétecteur $D_j$ sont mémorisées dans le dispositif $A_1$. Chaque durée $\Delta_{tj}$ transmise au dispositif $A_1$ est convertie en distance $\delta_j$ telle que :

$$\delta_j = d_j + d_o,$$

avec $\delta_j = \Delta_{tj} \times c$, où c est la vitesse de propagation de la lumière entre la source E et le bloc de réception $B_j$, $d_j$ la distance réelle entre la source E et le bloc de réception $B_j$, et $d_o$ une distance fictive introduite par la synchronisation des différents photodétecteurs $D_j$ et identique pour tous les photodétecteurs.

La position de la source $(X_o, Y_o, Z_o)$ est alors déterminée à l'aide des données :

$$X_{rj}, Y_{rj}, Z_{rj}, \theta_j, \phi_j, \vec{\upsilon}_{rj}, \delta_j, d_o$$

Les paramètres inconnus sont au nombre de 4 :

$$X_o, Y_o, Z_o, d_o.$$

Selon la méthode employée, géométrique ou analytique, trois ou quatre mesures de distance sont nécessaires pour localiser la source. Néanmoins, plus les mesures sont nombreuses, plus la localisation sera effectuée avec précision.

Pour chaque bloc de réception Bj voyant une source, sept informations permettent de construire une calotte sphérique qui sert à la recherche de la position de l'objet émetteur : les coordonnées du récepteur $(X_{rj}, Y_{rj}, Z_{rj})$, le vecteur directeur de son angle solide de visibilité $\vec{\upsilon}_{rj}$, ainsi que ses angles de vue en site et en azimut $(\theta_j, \phi_j)$, et la distance relative $\delta_j$.

Dans la mesure où la distance fictive introduite par la synchronisation est la même pour tous les blocs de réception, les coordonnées $(X_0, Y_0, Z_0)$ de la source à localiser vérifient l'équation suivante quel que soit le bloc de réception $B_j$ considéré :

$$(x_o - x_{rj})^3 + (Y_0 - Y_{rj})^3 + (z_0 - z_{rj})^3 = d_j^3 = (\delta_j - d_0)^3$$

$\vec{\upsilon}_{rj}$, $\theta_j$ et $\phi_j$ imposent des contraintes sur l'appartenance à cette sphère :

$$x_0 \in [X_{rj} - d_j \sin\theta_j, X_{rj} + d_j \sin\theta_j]$$

$$Y_0 \in [Y_{rj} - d_j \cos\theta_j \cos\phi_j, Y_{rj} + d_j \cos\theta_j \cos\phi_j]$$

$$Z_0 \in [Z_{rj} - d_j \cos\theta_j \sin\phi_j, z_{rj} + d_j \cos\theta_j \sin\phi_j]$$

Deux solutions, l'une géométrique et l'autre analytique sont proposées pour localiser l'objet.

<u>Solution géométrique</u>

Dans cette application, les sphères ne sont plus concourantes car leur rayon $\delta_j$ correspond à la distance source/récepteur $d_j$ additionnée d'un offset $d_0$. Pour résoudre le problème de façon géométrique, il est nécessaire de s'affranchir de cet offset.

Pour cela, nous pouvons par exemple considérer les deux blocs de réception $B_j$ et $B_k$ les plus éloignés dans le milieu considéré et délivrant tous deux une mesure de distance jugée fiable $\delta_j$ et $\delta_k$. La distance entre ces deux récepteurs, notée $L_{jk}$, peut être aisément évaluée :

$$L_{jk} = \sqrt{(X_{rj} - X_{rk})^2 + (Y_{rj} - Y_{rk})^2 + (Z_{rj} - Z_{rk})^2}$$

Des contraintes supplémentaires portant sur l'angle de vue de $B_j$ par $B_k$ pourraient également être introduites pour augmenter la précision de la localisation.

La distance offset $d_0$ peut alors être estimée de la façon suivante :

$$d_0 = \frac{\delta_j + \delta_k - L_{jk}}{2}$$

On peut alors estimer les coordonnées $(X_0, Y_0, Z_0)$ cherchée à l'aide d'une méthode géométrique. Pour cela, on considère que le point de coordonnée $(X_0, Y_0, Z_0)$ correspond au barycentre des centres des différentes sphères pondérées par l'inverse de leur rayon respectif auquel on a soustrait l'offset $d_0$.

Si m blocs de réception (m≤n) fournissent une mesure de distance exploitable, la solution cherchée s'exprime sous la forme :

$$X_0 = \frac{\sum_{j=1}^{m} \frac{1}{d_j} X_{rj}}{\sum_{j=1}^{m} \frac{1}{d_j}} = \frac{\sum_{j=1}^{m} \frac{1}{(\delta_j - d_0)} X_{rj}}{\sum_{j=1}^{m} \frac{1}{(\delta_j - d_0)}}$$

avec $X_0 \in [X_{rj} - d_j \sin \theta_j, X_{rj} + d_j \sin \theta_j] \ \forall_j$,

$$Y_0 = \frac{\sum_{j=1}^{m} \frac{1}{d_j} Y_{rj}}{\sum_{j=1}^{m} \frac{1}{d_j}} = \frac{\sum_{j=1}^{m} \frac{1}{(\delta_j - d_0)} Y_{rj}}{\sum_{j=1}^{m} \frac{1}{(\delta_j - d_0)}}$$

avec $Y_0 \in [Y_{rj} - d_j \cos \theta_j \cos \phi_j, Y_{rj} + d_j \cos \theta_j \cos \phi_j] \ \forall_j$,

$$Z_0 = \frac{\sum\limits_{j=1}^{m} \frac{1}{d_j} z_{rj}}{\sum\limits_{j=1}^{m} \frac{1}{d_j}} = \frac{\sum\limits_{j=1}^{m} \frac{1}{(\delta_j - d_0)} z_{rj}}{\sum\limits_{j=1}^{m} \frac{1}{(\delta_j - d_0)}}$$

avec $Z_0 \in [Z_{rj} - d_j \cos\theta_j \sin\phi_j, Z_{rj} + d_j \cos\theta_j \sin\phi_j] \; \forall_j$.

Cette méthode géométrique présente l'avantage :

- d'être simple,
- d'être indépendante du nombre de blocs de réception délivrant une mesure de distance fiable,
- d'être indépendante de la taille de l'espace,
- d'être peu coûteuse en calcul,
- de pouvoir donner lieu facilement à une réalisation matérielle.

Cette méthode géométrique peut être améliorée en introduisant une fonction de pondération tenant compte de la réalité physique du dispositif. Par exemple, elle pourrait être pondérée par la fonction d'erreur ou d'incertitude sur la mesure des durées $\Delta_{tj}$. Il est alors possible de former un espace de recherche prenant en considération la probabilité de présence du point de coordonnées $(X_0, Y_0, Z_0)$ cherché selon la précision estimée sur la mesure. La forme de l'espace de recherche peut être révélatrice de la répartition, judicieuse ou pas, des récepteurs dans l'espace observé. Cette répartition a aussi une influence sur la précision de l'estimation des coordonnées du point cherché, ainsi que sur l'estimation de l'offset $d_0$ qui conditionne la suite du calcul.

Solution analytique

La solution analytique proposée est basée sur le fait que le point cherché est porté par le rayon de chacune des sphères auquel on a retiré l'offset $d_0$ commun à toutes les sphères. La distance du point de coordonnées $(X_0, Y_0, Z_0)$ au centre de la sphère correspondant au bloc de réception $B_j$ est donnée par l'équation :

$$(X_0 - X_{rj})^2 + (Y_0 - Y_{rj})^2 + (Z_0 - Z_{rj})^2 = d_j^2 = (\delta_j - d_0)^2$$

On suppose disposer d'au moins quatre mesures de distance, c'est-à-dire qu'au moins quatre blocs de réception voient une source, et on prend en compte toutes les mesures acceptables dont on dispose. Pour cela, on cherche à minimiser la fonction d'énergie :

$$EN^2 = \sum_{j=1}^{m} \left( (x_0 - x_{rj})^2 + (y_0 - y_{rj})^2 + (z_0 - z_{rj})^2 - (\partial_j - d_0)^2 \right)^2, \; m \leq n.$$

L'annulation de la dérivée partielle de cette fonction d'énergie par rapport à chacune des variables à estimer conduit à résoudre un système de quatre équations à quatre inconnues :

$$\left\{ \begin{array}{l} \dfrac{\partial E_N^2}{\partial x_0} = 0 \Leftrightarrow \sum_j 4 \left(x_0 - x_{rj}\right) \cdot \left(\left(x_0 - x_{rj}\right)^2 + \left(y_0 - y_{rj}\right)^2 + \left(z_0 - z_{rj}\right)^2 - \left(\delta_j - d_0\right)^2\right) = 0 \\[2em] \dfrac{\partial E_N^2}{\partial y_0} = 0 \Leftrightarrow \sum_j 4 \left(y_0 - y_{rj}\right) \cdot \left(\left(y_0 - y_{rj}\right)^2 + \left(y_0 - y_{rj}\right)^2 + \left(z_0 - z_{rj}\right)^2 - \left(\delta_j - d_0\right)^2\right) = 0 \\[2em] \dfrac{\partial E_N^2}{\partial z_0} = 0 \Leftrightarrow \sum_j 4 \left(z_0 - z_{rj}\right) \cdot \left(\left(x_0 - x_{rj}\right)^2 + \left(y_0 - y_{rj}\right)^2 + \left(z_0 - z_{rj}\right)^2 - \left(\delta_j - d_0\right)^2\right) = 0 \\[2em] \dfrac{\partial E_N^2}{\partial d_0} = 0 \Leftrightarrow \sum_j 4 \left(\delta_0 - d_0\right) \cdot \left(\left(x_0 - x_{rj}\right)^2 + \left(y_0 - y_{rj}\right)^2 + \left(z_0 - z_{rj}\right)^2 - \left(\delta_j - d_0\right)^2\right) = 0 \end{array} \right.$$

Ce système d'équations non linéaires est difficile à résoudre tel quel. On linéarise les équations afin de faciliter sa résolution.

Recherche par moindres carrés après linéarisation des équations :

Considérons deux blocs de réception $B_j$ et $B_k$ voyant chacun une source et permettant de fournir respectivement une mesure de distance $\delta_j$ et $\delta_k$. Les coordonnées de l'objet vérifient simultanément les équations :

$$\left\{ \begin{array}{l} \left(x_0 - x_{rj}\right)^2 + \left(y_0 - y_{rj}\right)^2 + \left(z_0 - z_{rj}\right)^2 = d_j^2 = \left(\delta_j - d_0\right)^2 \\[1em] \left(x_0 - x_{rk}\right)^2 + \left(y_0 - y_{rk}\right)^2 + \left(z_0 - z_{rk}\right)^2 = d_k^2 = \left(\delta_k - d_0\right)^2 \end{array} \right.$$

Par soustraction de ces deux équations, on obtient :

$$\left(X_0^2 - 2X_{rj}X_0 + X_{rj}^2\right) - \left(X_0^2 - 2X_{rk}X_0 + X_{rk}^2\right) + \left(Y_0^2 - 2Y_{rj}Y_0 + Y_{rj}^2\right) - \left(Y_0^2 - 2Y_{rk}Y_0 + Y_{rk}^2\right)$$
$$+ \left(Z_0^2 - 2Z_{rj}Z_0 + Z_{rj}^2\right) - \left(Z_0^2 - 2Z_{rk}Z_0 + Z_{rk}^2\right) = \left(\partial_j^2 - 2\partial_j d_0 + d_0^2\right) - \left(\partial_k^2 - 2\partial_k d_0 + d_0^2\right)$$

soit :

$$2\left(X_{rk} - X_{rj}\right)X_0 + 2\left(Y_{rk} - Y_{rj}\right)Y_0 + 2\left(Z_{rk} - Zrj\right)Z_0 - 2\left(\partial_k - \partial_j\right)d_0$$
$$= \left(\partial_j^2 - \partial_k^2\right) - \left(X_{rj}^2 - X_{rk}^2\right) - \left(Y_{rj}^2 - Y_{rk}^2\right) - \left(Z_{rj}^2 - Z_{rk}^2\right)$$

Posons :

$$A_{jk} = 2\left(X_{rk} - X_{rj}\right)$$

$$B_{jk} = 2\left(Y_{rk} - Y_{rj}\right)$$

$$C_{jk} = 2\left(Z_{rk} - Z_{rj}\right)$$

$$D_{jk}=-2(\partial_k-\partial_j)$$

$$E_{jk}=\left(\partial_j^2-\partial_k^2\right)-\left(X_{rj}^2-X_{rk}^2\right)-\left(Y_{rj}^2-Y_{rk}^2\right)-\left(Z_{rj}^2-Z_{rk}^2\right)$$

On a alors :

$$A_{jk}X_0+B_{jk}Y_0+C_{jk}Z_0+D_{jk}d_0=E_{jk}$$

pour tout $j\neq k$.

On obtient une équation linéaire à quatre inconnues.

Si m ensembles de réception fournissent une information de distance, il est possible de former un système de

$$\sum_{j=1}^{m-1} j = \frac{m(m-1)}{2}$$

équations linéaires à 4 inconnues. Ce système peut être résolu aisément par moindres carrés. Cela suppose qu'il n'y ait qu'une seule solution et que cette solution satisfasse les contraintes imposées par la configuration du dispositif.

Pour trouver la solution, on minimise la fonction d'énergie :

$$EN^2 = \sum_{j,k \text{ tels que } j\neq k} \left(A_{jk}X_0 + B_{jk}Y_0 + C_{jk}Z_0 + D_{jk}d_0 - E_{jk}\right)^2$$

D'où le système linéaire de quatre équations à 4 inconnues à résoudre :

$$\begin{cases} \dfrac{\partial E^2}{\partial X_0} = 0 \Leftrightarrow \sum_{j,k} A_{jk}\left(A_{jk}X_0 + B_{jk}Y_0 + C_{jk}Z_0 + D_{jk}d_0 - E_{jk}\right)^2 = 0 \\[4mm] \dfrac{\partial E^2}{\partial Y_0} = 0 \Leftrightarrow \sum_{j,k} B_{jk}\left(A_{jk}X_0 + B_{jk}Y_0 + C_{jk}Z_0 + D_{jk}d_0 - E_{jk}\right)^2 = 0 \\[4mm] \dfrac{\partial E^2}{\partial Z_0} = 0 \Leftrightarrow \sum_{j,k} C_{jk}\left(A_{jk}X_0 + B_{jk}Y_0 + C_{jk}Z_0 + D_{jk}d_0 - E_{jk}\right)^2 \\[4mm] \dfrac{\partial E^2}{\partial d_0} = 0 \Leftrightarrow \sum_{j,k} D_{jk}\left(A_{jk}X_0 + B_{jk}Y_0 + C_{jk}Z_0 + D_{jk}d_0 - E_{jk}\right)^2 = 0 \end{cases}$$

qui peut s'écrire sous la forme matricielle suivante :

$$
\begin{bmatrix}
\displaystyle\sum_{j,k} A_{jk}^2 & \displaystyle\sum_{j,k} A_{jk}B_{jk} & \displaystyle\sum_{j,k} A_{jk}C_{jk} & \displaystyle\sum_{j,k} A_{jk}D_{jk} \\[1em]
\displaystyle\sum_{j,k} A_{jk}B_{jk} & \displaystyle\sum_{j,k} B_{jk}^2 & \displaystyle\sum_{j,k} B_{jk}C_{jk} & \displaystyle\sum_{j,k} B_{jk}D_{jk} \\[1em]
\displaystyle\sum_{j,k} A_{jk}C_{jk} & \displaystyle\sum_{j,k} B_{jk}C_{jk} & \displaystyle\sum_{j,k} C_{jk}^2 & \displaystyle\sum_{j,k} C_{jk}D_{jk} \\[1em]
\displaystyle\sum_{j,k} A_{jk}D_{jk} & \displaystyle\sum_{j,k} B_{jk}D_{jk} & \displaystyle\sum_{j,k} C_{jk}D_{jk} & \displaystyle\sum_{j,k} D_{jk}^2
\end{bmatrix}
\begin{bmatrix} X_0 \\ Y_0 \\ Z_0 \\ d_0 \end{bmatrix}
=
\begin{bmatrix}
\displaystyle\sum_{j,k} A_{jk}E_{jk} \\[1em]
\displaystyle\sum_{j,k} B_{jk}E_{jk} \\[1em]
\displaystyle\sum_{j,k} C_{jk}E_{jk} \\[1em]
\displaystyle\sum_{j,k} D_{jk}E_{jk}
\end{bmatrix}
$$

sachant que la solution ($X_0$, $Y_0$, $Z_0$, $d_0$) doit vérifier les contraintes imposées par la configuration du dispositif et concernant notamment les angles de visibilité des différents photodétecteurs.

Résolution par moindres carrés pondérés :

Pour améliorer la précision de l'estimation, il est possible d'affecter un poids à chaque équation. Ce poids est d'autant plus élevé que les deux récepteurs considérés pour former l'équation sont éloignés. Il peut être noté $\omega_{jk}$ et est proportionnel à la quantité :

$$(X_{rj}-X_{rk})^2 + (Y_{rj}-Y_{rk})^2 + (Z_{rj}-Z_{rk})^2 \quad \text{avec } 0 < \omega_{jk} \leq 1$$

Ultérieurement, ce poids pourra également dépendre de la confiance que l'on accorde à la mesure de distance fournie par l'ensemble de réception.

La fonction d'énergie à minimiser s'exprime alors sous la forme :

$$EN^2 = \sum_{j,k \text{ tels que } j \neq k} \omega_{jk}\Big(A_{jk}X_0 + B_{jk}Y_0 + C_{jk}Z_0 + D_{jk}d_0 - E_{jk}\Big)^2$$

d'où le système matriciel à résoudre :

$$
\begin{bmatrix}
\displaystyle\sum_{j,k} \omega_{jk}A_{jk}^2 & \displaystyle\sum_{j,k} \omega_{jk}A_{jk}B_{jk} & \displaystyle\sum_{j,k} \omega_{jk}A_{jk}C_{jk} & \displaystyle\sum_{j,k} \omega_{jk}A_{jk}D_{jk} \\[1em]
\displaystyle\sum_{j,k} \omega_{jk}A_{jk}B_{jk} & \displaystyle\sum_{j,k} \omega_{jk}B_{jk}^2 & \displaystyle\sum_{j,k} \omega_{jk}B_{jk}C_{jk} & \displaystyle\sum_{j,k} \omega_{jk}B_{jk}D_{jk} \\[1em]
\displaystyle\sum_{j,k} \omega_{jk}A_{jk}C_{jk} & \displaystyle\sum_{j,k} \omega_{jk}B_{jk}C_{jk} & \displaystyle\sum_{j,k} \omega_{jk}C_{jk}^2 & \displaystyle\sum_{j,k} \omega_{jk}C_{jk}D_{jk} \\[1em]
\displaystyle\sum_{j,k} \omega_{jk}A_{jk}D_{jk} & \displaystyle\sum_{j,k} \omega_{jk}B_{jk}D_{jk} & \displaystyle\sum_{j,k} \omega_{jk}C_{jk}D_{jk} & \displaystyle\sum_{j,k} \omega_{jk}D_{jk}^2
\end{bmatrix}
\begin{bmatrix} X_0 \\ Y_0 \\ Z_0 \\ d_0 \end{bmatrix}
=
\begin{bmatrix}
\displaystyle\sum_{j,k} \omega_{jk}A_{jk}E_{jk} \\[1em]
\displaystyle\sum_{j,k} \omega_{jk}B_{jk}E_{jk} \\[1em]
\displaystyle\sum_{j,k} \omega_{jk}C_{jk}E_{jk} \\[1em]
\displaystyle\sum_{j,k} \omega_{jk}D_{jk}E_{jk}
\end{bmatrix}
$$

Cette méthode présente l'avantage de conduire à un résultat estimé avec plus de précision que la méthode géométrique décrite précédemment. Elle est indépendante de la taille de l'espace considéré et du nombre d'ensemble de réception fournissant une mesure de distance. Elle permet, plus facilement qu'avec la méthode géométrique, de prendre en compte des informations a priori sur la confiance des mesures $\Delta_{tj}$ délivrées.

Selon l'invention, le dispositif de la figure 1 s'applique avantageusement à la détermination de la position d'un objet sur lequel sont regroupées p sources microlaser.

Les p sources microlasers regroupées sur l'objet sont alors des sources microlaser sensiblement synchrones émettant des ondes de longueur d'onde identiques. Il peut s'agir de p sources microlaser différentes émettant chacune dans un secteur angulaire donné - les secteurs angulaires pouvant éventuellement se recouvrir - ou encore d'une seule source microlaser positionnée sur l'objet et diffusant la lumière dans p fibres optiques différentes également positionnées sur l'objet.

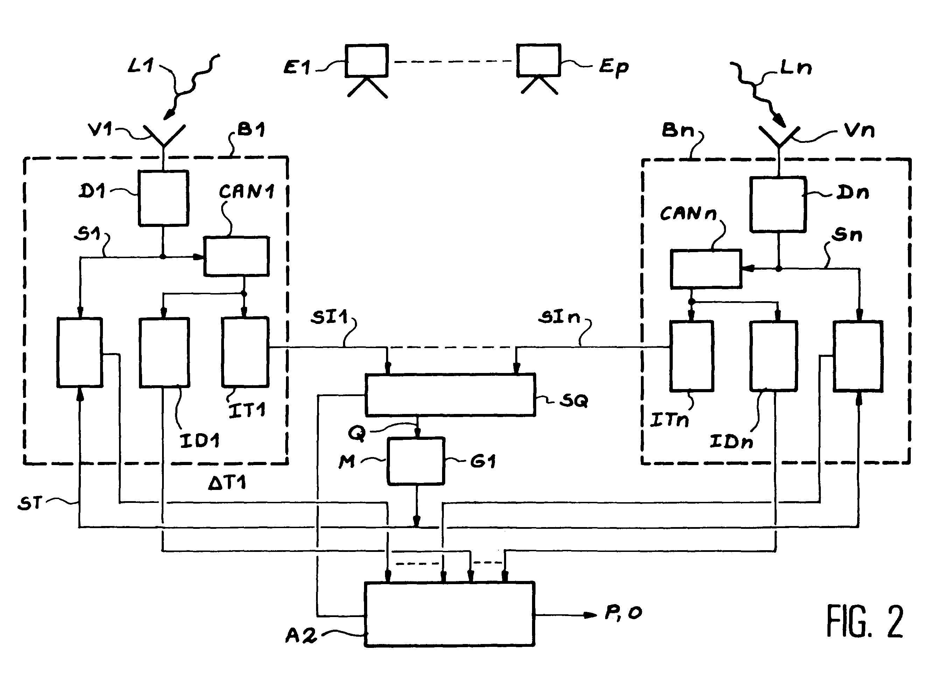

La figure 2 représente un dispositif de détermination de position d'au moins un émetteur de signaux impulsionnels selon un premier perfectionnement de l'invention.

Le dispositif de la figure 2 comprend p émetteurs de signaux impulsionnels $E_1$, ..., $E_p$, p étant un entier supérieur ou égal à 1, n blocs de réception $B_1$, ..., $B_n$, un séquenceur SQ, un générateur d'impulsions $G_1$ et un dispositif $A_2$ de détermination de position et/ou d'orientation. Le nombre n de blocs de réception pour déterminer la position d'une source est supérieur ou égal à 4. L'accroissement du nombre n de blocs de réception conduit avantageusement à un accroissement de la précision de la position de la source. Chaque bloc de réception $B_j$ comprend, outre les circuits $D_j$, $C_j$, $CAN_j$ et $IT_j$ mentionnés précédemment, un circuit $ID_j$ permettant d'identifier la source d'où provient l'impulsion qui arrête le comptage du compteur $C_j$.

Le dispositif de la figure 2 s'applique à la détermination de la position d'au moins une source microlaser. Dans le cas où l'invention s'applique à la détection d'impulsions provenant de p sources distinctes, les p sources microlaser peuvent être regroupées sur un même objet. L'invention permet alors avantageusement de déterminer non seulement la position mais également l'orientation de l'objet.

Selon le mode de réalisation de la figure 2, une source microlaser est codée de façon à pouvoir être identifiée. Selon le mode de réalisation préférentiel de l'invention, les sources microlaser sont des sources microlaser solides monolithiques à déclenchement passif dont l'émission est codée par modulation de leur signal de pompe respectif tel que décrit dans la demande de brevet français déposée le 29 septembre 1998, au nom de la Demanderesse, sous le numéro d'enregistrement national 98 12146.

Une source microlaser solide monolithique comprend une cavité microlaser et des moyens de pompage optique.

Le principe du déclenchement passif d'un microlaser est décrit dans la demande de brevet européen EP-653 824. Il repose sur la présence, à l'intérieur de la cavité, d'un absorbant saturable qui va déclencher les pertes de la cavité. La transmission de cet absorbant change en fonction de l'intensité du faisceau lumineux qui le traverse. Le développement d'une impulsion laser n'est possible que lorsque l'absorbant est transparent. Le milieu à gain peut alors se vider de l'énergie emmagasinée sous forme d'une impulsion géante.

Pour assurer le fonctionnement du microlaser, on alimente en photons le matériau à gain avec une diode laser de pompe dont l'émission est adaptée en longueur d'onde à la fenêtre d'absorption du milieu. La puissance d'injection dans le microlaser est contrôlée par le courant de polarisation dans la diode laser.

Une variation sur la valeur du courant de polarisation de la diode laser de pompe engendre une modification sur la puissance optique injectée dans la cavité du microlaser. De ce fait, l'intensité du faisceau lumineux qui va traverser la cavité est plus ou moins importante, et la variation de transmission est plus ou moins rapide. On observe, de plus, une variation appelée "jitter" de l'instant d'apparition des impulsions, due à une incertitude sur le seuil de déclenchement de l'absorbant saturable à l'intérieur de la cavité et sur la valeur de la puissance d'injection par rapport à la valeur du seuil du microlaser (valeur d'injection faible).

Le codage de l'émission des impulsions du microlaser est réalisé en modulant le signal de pompe responsable de l'excitation du microlaser. Ce signal de pompe provient de moyens de pompage optique, par exemple d'une diode de pompe. La récurrence des impulsions est liée à la puissance P du signal de pompe du microlaser, et donc, dans le cas d'une diode, au courant I appliqué sur les électrodes de la diode de pompe. Au-dessus d'un seuil $I_0$, plus ce courant est important, plus les impulsions laser seront émises dans un intervalle de temps rapproché. On peut considérer qu'au-dessus du courant seuil $I_0$, une loi linéaire relie la puissance délivrée par la diode de pompe et la fréquence de récurrence du microlaser.

Il y a émission, par le microlaser, d'une impulsion laser, lorsque l'énergie confinée dans la cavité atteint le seuil au-delà duquel l'absorbant saturable devient transparent, cette impulsion se produisant à un instant compris dans une fenêtre temporelle déterminée par les caractéristiques du microlaser et par l'intensité du signal de modulation.

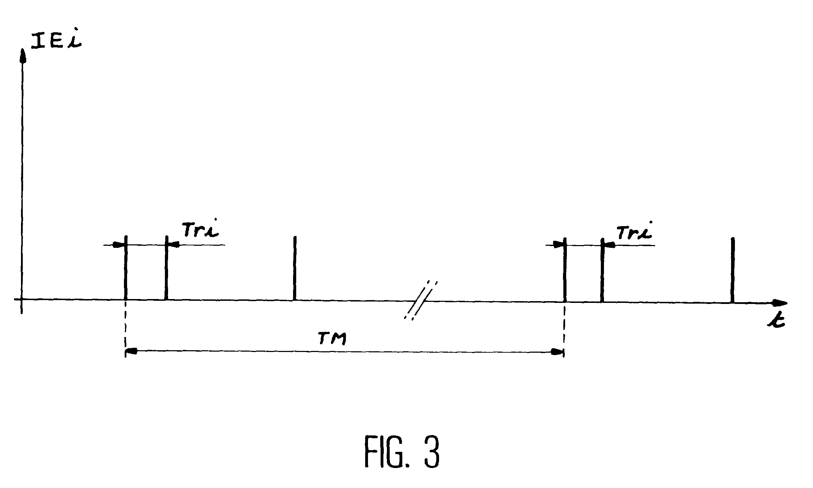

La figure 3 représente des trains d'impulsions successifs émis par un émetteur selon l'invention.

Le signal $IE_i$ émis par une source $E_i$ (i=1, ..., p) est constitué d'une succession de trains d'impulsions se répétant avec une période $T_M$ commune à toutes les sources. Chaque train d'impulsions est composé de N impulsions, N étant un entier supérieur ou égal à 1. Dans le cas où N est supérieur ou égal à 2, les impulsions d'un même train d'impulsions ont une récurrence $T_{ri}$ propre à la source $E_i$.

Selon l'invention, toutes les sources $E_i$ (i=1, ..., p) sont excitées sensiblement au même instant.

Les impulsions émises par chaque source $E_i$ sont d'amplitude et de largeur connues. La période de récurrence $T_{ri}$ des impulsions de chaque train d'impulsions est également connue.

Chaque circuit d'identification $ID_j$ comprend une mémoire permettant de stocker l'ensemble de ces données (amplitudes des impulsions des différentes sources, largeurs de ces impulsions, périodes de récurrence).

Comme cela a été mentionné précédemment, quand une impulsion est détectée par le photodétecteur $D_j$ du bloc de réception $B_j$, le signal $S_j$ issu du photodétecteur $D_j$ est numérisé par le convertisseur analogique/digital $CAN_j$ et le signal numérique issu du convertisseur $CAN_j$ est transmis au circuit d'identification $ID_j$.

Le signal numérique reçu s'écrit :

$$R_j(t) \; = \; \sum_{i=1}^{p} a_{ij} \; H_i(t) \; + \; b_j(t)$$

où :

- $a_{ij}$ est un coefficient pondérant l'amplitude du signal reçu par le bloc de réception $B_j$ et provenant de la source $E_i$ ($0 \leq aij \leq 1$),
- $H(t)= h(t)*IE_i(t)$ avec :

    · $h(t)$ la réponse impulsionnelle du filtre modélisant le récepteur,
    · $IE_i(t)$ le signal émis par la source $E_i$ à l'instant t, le symbole * représentant l'opération mathématique de produit de convolution,

- $bj(t)$ le bruit gaussien détecté par le bloc de réception $B_j$.

Selon l'invention, le circuit d'identification $ID_j$ permet de faire la corrélation entre le signal reçu $R_j(t)$ et chacun des signaux de référence $Y_i(t)$ formé d'après les données mémorisées caractéristiques du signal émis par la source $E_i$ ($i=1, ..., p$).

La corrélation entre le signal numérique $R_j(t)$ et le signal de référence $Y_i(t)$ s'écrit :

$$C_{ij}(\tau) \; = \; \frac{1}{T_{ci}} \sum_{t=0}^{T_{ci}} Y_i(t) \; x \; R_j(t - \tau)$$

$T_{ci}$ étant la durée sur laquelle est effectuée la corrélation entre le signal $R_j(t)$ et le signal $Y_i(t)$.

Le signal $Y_i(t)$ est construit de telle façon qu'il soit très fortement corrélé avec le signal $IE_i(t)$ émis par la source $E_i$ et très fortement décorrélé avec les signaux émis par les autres sources.

La corrélation est établie simultanément pour les p sources. Il est alors possible d'identifier la source qui a émis l'impulsion reçue, c'est-à-dire l'impulsion à l'origine de l'interruption du comptage du compteur $C_j$.

Selon le mode de réalisation préférentiel du perfectionnement de l'invention, la corrélation s'effectue en temps réel à une fréquence élevée, par exemple de l'ordre de 500 MHz.

Le dispositif de la figure 2 permet ainsi d'identifier la source à l'origine de la première impulsion reçue par chaque photodétecteur.

Il est alors possible, sur la base des données $X_{rj}$, $Y_{rj}$, $Z_{rj}$, $\theta_{rj}$, $\phi_{rj}$, $\vec{\upsilon}_{rj}$, $\delta_j$, $d_o$ et des données d'identification, de déterminer la position occupée par chaque source microlaser parmi les sources microlaser émettrices.

Au cas où les p sources microlaser sont regroupées sur un même objet, il est possible de déterminer non seulement la position P mais également l'orientation O de l'objet.

Dans cette application, nous connaissons :

- la position exacte de chacun des photodétecteurs $D_j$ dans le repère du milieu observé et son secteur de visibilité, soit ($X_{rj}$, $Y_{rj}$, $Z_{rj}$, $\theta_j$, $\phi_j$, $\vec{\upsilon}_{rj}$),
- la position exacte des sources microlaser dans le repère de l'objet équipé, ou la position relative de ces sources dans le repère du milieu observé,
- l'identification de la source la plus proche de chacun des ensembles de réception ayant collecté un signal utile,
- la distance relative $\delta_{ij}$ du photodétecteur $D_j$ à la source la plus proche $E_i$ ou l'absence de visibilité d'une quelconque source par le récepteur. On a $\delta_{ij}=d_{ij}+d_0$ où $d_{ij}$ est la distance réelle source/photodétecteur $D_j$ et $d_0$ la distance fictive introduite par la synchronisation et identique pour tous les ensembles de réception ($d_0$ est généralement négative).

La position et l'orientation de l'objet sont parfaitement définies par la connaissance des coordonnées de chacune des sources microlaser équipant l'objet dans le repère du milieu observé. Les coordonnées d'une source microlaser $E_i$ dans ce repère sont notées $(X_{Ei}, Y_{Ei}, E_{Ei})$. Le nombre de paramètres à estimer est donc 3.p où p désigne le nombre de sources microlaser équipant l'objet à localiser. Un paramètre supplémentaire do, homogène à une distance et introduit par l'effet de synchronisation des récepteurs entre eux, est également à estimer. Le nombre total de paramètres à estimer est donc égal à 3.p+1.

Pour effectuer l'estimation de ces paramètres, au moins 3.p+1 mesures de distance fiables doivent avoir été collectées par 3.p+1 photodétecteurs distincts, si possible répartis de telle façon que chacune des sources soit identifiée au minimum par 3 photodétecteurs différents.

Pour chaque photodétecteur Dj voyant au moins une source, nous disposons de plusieurs informations permettant de construire une calotte sphérique qui servira à la recherche de la position et de l'orientation de l'objet émetteur :

- les coordonnées du photodétecteur dans le repère du milieu observé $(X_{rj}, Y_{rj}, Z_{rj})$,
- l'identification de la source microlaser la plus proche $E_i$,
- le vecteur directeur $\vec{\upsilon}_{rj}$ de son angle solide de visibilité,
- ses angles de vue en site et en azimut $(\theta_j, \phi_j)$,
- la distance relative photodétecteur/source microlaser notée $\delta_{ij}$.

Nous considérerons par la suite que m ensembles de réception parmi les n en présence ont collecté une mesure de distance exploitable et ont identifié la source microlaser à l'origine de cette mesure de distance. La source identifiée est normalement la plus proche de chacun des P photodétecteurs considérés. Pour pouvoir résoudre convenablement le problème d'estimation, on doit avoir m≥3.p+1.

Dans la mesure où la distance fictive $d_0$ introduite par la synchronisation est la même pour les m ensembles de réception, les coordonnés $(X_{Ei}, Y_{Ei}, Z_{Ei})$ des sources microlaser à localiser vérifient l'équation de la sphère suivante, quel que soit le bloc récepteur $B_j$ et la source $E_i$ considérés :

$$(X_{Ei}-X_{Ej})^3+(Y_{Ei}-Y_{Ej})^3+(Z_{Ei}-Z_{Ej})^3=d_{ij}^3=(\delta_{ij}-d_0)^3$$

$\vec{\upsilon}_{rj}$, $\theta_j$ et $\phi_j$ imposent des contraintes sur l'appartenance à cette sphère.

$$X_{Ei} \in [X_{rj} - d_{ij} \sin \theta_j, X_{rj} + d_{ij} \sin \theta_j]$$

$$Y_{Ei} \in [Y_{rj} - d_{ij} \cos \theta_j \cos \phi_j, Y_{rj} + d_{ij} \cos \theta_j \cos \phi_j]$$

$$Z_{Ei} \in [Z_{rj} - d_{ij} \cos \theta_j \sin \phi_j, Z_{rj} + d_{ij} \cos \theta_j \sin \phi_j]$$

On peut aussi écrire ces équations d'une autre façon en considérant que la source microlaser cherchée, $E_i$, est portée par le rayon $d_{ij}$ de chacune des sphères ayant pour origine un photodétecteur $D_j$ qui a identifié cette source comme étant la plus proche de lui. On obtient alors m équations de la forme :

$$(X_{Ei}-X_{rj})^2+(Y_{Ei}-Y_{rj})^2+(Z_{Ei}-Z_{rj})^2 = d_{ij}^2 = (\delta_{ij}-d_0)^2$$

A ces équations vient s'ajouter la connaissance des positions relatives des différentes sources microlaser, qui peut s'exprimer de plusieurs manières. Par exemple, si on les caractérise par leur distance les unes aux autres, on obtient $\frac{P(P-1)}{2}$ équations supplémentaires de la forme :

$$(X_{Ei}-X_{Ek})^2+(Y_{Ei}-Y_{Ek})^2+(Z_{Ei}-Z_{Ek})^2= \lambda_{ik}^2$$

où $\lambda_{ik}$ représente la distance séparant la source $E_i$ de la source $E_k$, ces sources équipant toutes deux le même objet.

Plusieurs solutions, géométrique ou analytique, peuvent être utilisées pour estimer les paramètres recherchés à l'aide des équations précédentes.

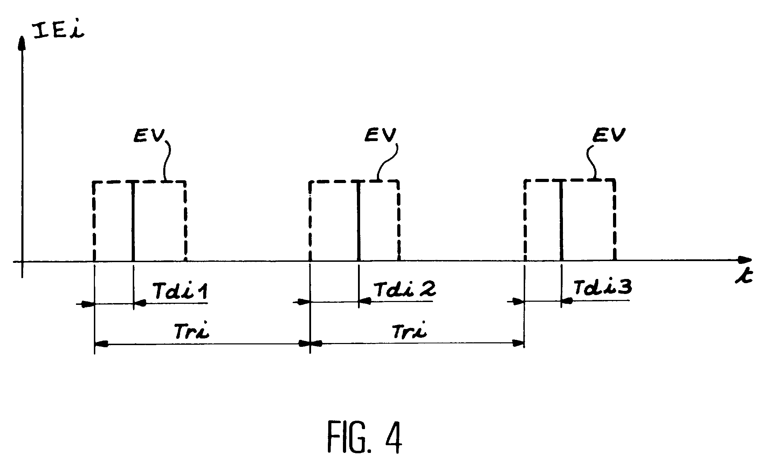

La figure 4 représente une vue détaillée d'un train d'impulsions émis par un émetteur selon l'invention. A titre d'exemple non limitatif, le train d'impulsions laser est composé de trois impulsions.

L'émetteur est préférentiellement une source microlaser à déclenchement passif modulée par un signal de pompe. L'enveloppe EV du signal de pompe à l'origine de chaque impulsion est représentée en traits discontinus. La durée qui sépare deux enveloppes successives est la période de récurrence $T_{ri}$ mentionnée précédemment.

Toutes les sources $E_i$ (i=1, ..., p) sont supposées excitées au même instant par leur signal de pompe pour émettre la première impulsion du train d'impulsions. Le temps écoulé entre l'instant où le microlaser est excité par le signal de pompe et l'instant où l'impulsion de rang k (k=1, 2, 3) est émise est noté $T_{dik}$ sur la figure 4.

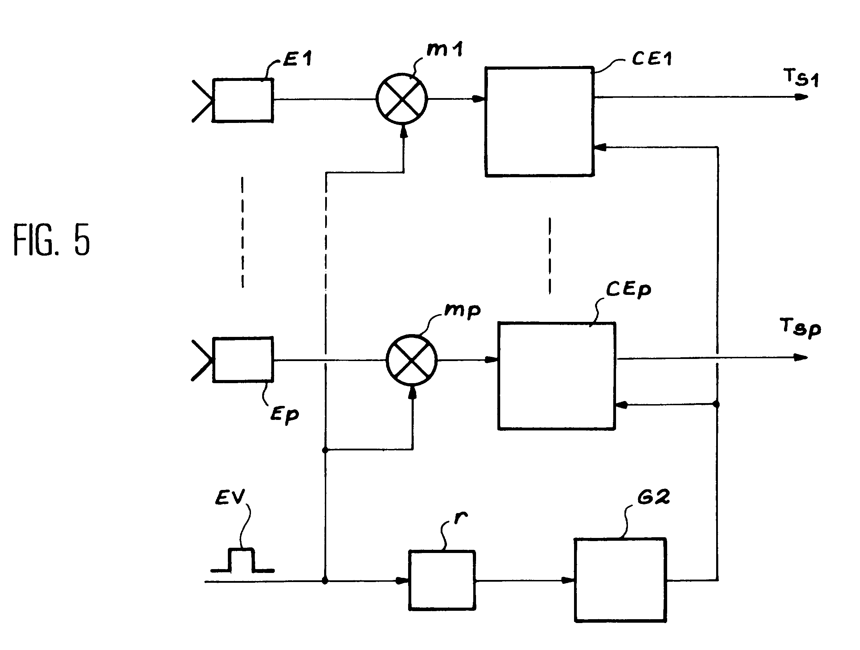

La figure 5 représente un dispositif pour déterminer le temps écoulé entre l'instant où une source microlaser est excitée par un signal de pompe et l'instant où l'impulsion résultant de cette excitation est émise.

Le dispositif comprend p sources microlaser $E_1$, ... $E_p$, p mélangeurs $m_1$, ..., $m_p$, p circuits de comptage $CE_1$, ..., $CE_p$, p étant un entier supérieur ou égal à 1, un circuit de retard r et un générateur d'impulsions $G_2$.

Chaque circuit de comptage $CE_i$ (i=1, ..., p) est, par exemple, un circuit de comptage tel que celui décrit dans la demande de brevet français FR-2 745 668 mentionnée précédemment. Il s'ensuit qu'un compteur $CE_i$ possède une première entrée pour recevoir un signal qui déclenche le comptage et une deuxième entrée pour recevoir un signal qui interrompt le comptage.

Comme cela a été mentionné ci-dessus, toutes les sources sont excitées au même instant par leur signal de pompe. La première impulsion du train d'impulsions issu de la source microlaser $E_i$ (i=1, ..., p) est mélangée avec le signal d'enveloppe EV du signal de pompe dans le mélangeur $m_i$. Le signal issu du mélangeur mi est transmis à la première entrée du circuit de comptage $CE_i$. Les deuxièmes entrées des circuits de comptage $CE_i$ (i=1, ..., p) sont reliées entre elles.

Une impulsion issue du générateur d'impulsions $G_2$ est envoyée simultanément sur les deuxièmes entrées des circuits de comptage $CE_i$ (i=1, ..., p). Cette impulsion interrompt le comptage des circuits $CE_i$. Pour chaque source microlaser, le circuit de comptage $CE_i$ permet ainsi le calcul de la durée $T_{si}$ écoulée entre l'instant d'émission de la première impulsion d'un train d'impulsions et une référence commune à toutes les sources. Il est alors possible de déduire le temps $T_{di1}$ écoulé, pour chaque train d'impulsions de chaque source, entre l'instant où le microlaser est excité par le signal de pompe pour émettre une première impulsion et l'instant où la première impulsion du train est émise.

$T_{min}$ étant la durée la plus courte parmi les durées $T_{si}$ (i=1, ..., p), il vient :

$$T_{di1}=T_{si}-T_{min}.$$

L'impulsion issue du générateur $G_2$ est commandée par le signal d'enveloppe EV du signal de pompe retardé du retard r. La durée du retard r est au moins égale à la largeur du signal d'enveloppe EV. Le générateur $G_2$ envoie une impulsion aux circuits de comptage $CE_1$, ..., $CE_p$ lorsqu'il reçoit, par exemple, le front montant de l'enveloppe retardée.

La source microlaser $E_i$ à l'origine d'une première impulsion reçue par le bloc de réception $B_j$ étant identifiée, il est alors possible de corriger de la durée $T_{di1}$ la durée $\Delta_{tj}$ calculée par le compteur $C_j$ du bloc de réception.

La durée corrigée $\Delta_{tjc}$ s'écrit :

$$\Delta_{tjc}=\Delta_{tj}-T_{di1}.$$

Selon un perfectionnement du dispositif de l'invention de la figure 2, la position P et/ou l'orientation O d'une source émettrice ou d'un objet est déterminée en prenant en compte le temps $T_{di1}$ écoulé, pour chaque train d'impulsions de chaque source, entre l'instant où le microlaser est excité par le signal de pompe et l'instant où la première impulsion du train est émise.

A cette fin, les données $T_{di1}$ ou les données $\Delta_{tjc}$ sont transmises au dispositif $A_2$ de localisation et/ou d'orientation.

**Revendications**

1. Procédé pour déterminer la position $(X_o, Y_o, Z_o)$, dans un repère contenant au moins un récepteur ayant une position $(X_{rj}, Y_{rj}, Z_{rj})$ et un secteur de visibilité $(\theta_{rj}, \phi_{rj}, \vec{\upsilon}_{rj})$, d'au moins un émetteur de trains d'impulsions successifs de périodes $T_M$, chaque train d'impulsions comprenant au moins une première impulsion, le procédé comprenant :

   - l'émission d'un premier train d'impulsions par l'émetteur,

- l'intégration, à partir d'un instant postérieur à l'instant d'émission de la première impulsion du premier train d'impulsions, et pendant une durée $T_{int}$ inférieure à $T_M$, des signaux que reçoit le récepteur de façon à générer un signal d'intégration,
- le déclenchement du comptage d'une durée ($\Delta_{tj}$) à l'instant qui détermine la fin de la durée $T_{int}$, si le signal d'intégration a une amplitude inférieure ou égale à un seuil donné,
- l'interruption du comptage de la durée ($\Delta_{tj}$) à l'instant où le récepteur reçoit la première impulsion du train d'impulsions qui succède au premier train d'impulsions,
- la détermination de la position ($X_o$, $Y_o$, $Z_o$) de l'émetteur à partir de la position ($X_{rj}$, $Y_{rj}$, $Z_{rj}$) et du secteur de visibilité ($\theta_{rj}$, $\phi_{rj}$, $\vec{v}_{rj}$) du récepteur et de la durée ($\Delta_{tj}$).

2. Procédé selon la revendication 1, caractérisé en ce que l'intégration des signaux est précédée d'une étape de numérisation des signaux.

3. Procédé selon la revendication 1 ou 2, caractérisé en ce qu'il comprend une étape permettant d'identifier l'émetteur d'où provient la première impulsion du train d'impulsions qui succède au premier trains d'impulsions.

4. Procédé selon la revendication 3, caractérisé en ce que l'étape permettant d'identifier l'émetteur est une étape de corrélation du signal reçu avec un signal $Y_i(t)$ de référence formé d'après des données mémorisées caractéristiques du signal émis par l'émetteur.

5. Procédé selon l'une quelconque des revendications 3 ou 4, caractérisé en ce qu'il comprend une étape pour déterminer l'orientation de l'émetteur à partir de la position ($X_{rj}$, $Y_{rj}$, $Z_{rj}$) et du secteur de visibilité ($\theta_{rj}$, $\phi_{rj}$, $\vec{v}_{rj}$) du récepteur, de la durée ($\Delta_{tj}$) et des données issues de l'étape d'identification.

6. Procédé selon l'une quelconque des revendications précédentes, caractérisé en ce que l'émetteur est une source microlaser solide monolithique à déclenchement passif dont l'émission est codée par modulation de son signal de pompe et en ce que le récepteur est un photodétecteur ($D_j$).

7. Procédé selon la revendication 6, caractérisé en ce qu'il comprend une étape permettant de mesurer la durée ($Td_{i1}$) qui sépare l'instant où la première impulsion d'un train d'impulsions est émise et l'instant où la source microlaser est excitée par le signal de pompe et en ce que ladite durée est prise en compte dans la détermination de la position ($X_o$, $Y_o$, $Z_o$) et/ou de l'orientation de l'émetteur.

8. Dispositif pour déterminer la position ($X_o$, $Y_o$, $Z_o$), dans un repère, d'au moins un émetteur de trains d'impulsions successifs de période $T_M$, chaque train d'impulsions comprenant au moins une première impulsion, le dispositif comprenant :

- au moins un bloc de réception ($B_j$) constitué d'un récepteur ($D_j$) pour convertir en signal électrique ($S_j$) les signaux qu'il reçoit, le récepteur ayant une position ($X_{rj}$, $Y_{rj}$, $Z_{rj}$) et un secteur de visibilité ($\theta_{rj}$, $\phi_{rj}$, $\vec{v}_{rj}$) définis dans ledit repère, d'un circuit d'intégration ($IT_j$) pour intégrer à partir d'un instant postérieur à l'instant d'émission de la première impulsion du premier train d'impulsions et pendant une durée $T_{int}$ inférieure à $T_M$, les signaux que reçoit le récepteur ($D_j$) de façon à générer un signal d'intégration ($SI_j$), et d'un circuit de comptage ($C_j$) d'une durée ($\Delta T_j$), le déclenchement du comptage s'effectuant à l'instant qui détermine la fin de la durée $T_{int}$, si le signal d'intégration à une amplitude inférieure ou égale à un seuil donné et l'interruption du comptage s'effectuant à l'instant où le récepteur ($D_j$) reçoit la première impulsion du train d'impulsions qui succède au premier train d'impulsions,
- un dispositif ($A_1$) de détermination de position ($X_o$, $Y_o$, $Z_o$) de l'émetteur à partir de la position ($X_{rj}$, $Y_{rj}$, $Z_{rj}$) et du secteur de visibilité ($\theta_{rj}$, $\phi_{rj}$, $\vec{v}_{rj}$) du récepteur ($D_j$) et de la durée ($\Delta t_j$).

9. Dispositif selon la revendication 8, caractérisé en ce qu'il comprend entre le récepteur ($D_j$) et le circuit d'intégration ($IT_j$), un convertisseur analogique/digital ($CAN_j$).

10. Dispositif selon la revendication 8 ou 9, caractérisé en ce qu'il comprend un circuit ($ID_j$) permettant d'identifier l'émetteur d'où provient l'impulsion qui arrête le comptage du circuit de comptage ($C_j$).

11. Dispositif selon la revendication 10, caractérisé en ce que le circuit ($ID_j$) permettant d'identifier l'émetteur d'où provient l'impulsion qui arrête le comptage est un circuit de corrélation.

**12.** Dispositif selon l'une quelconque des revendications 10 ou 11, caractérisé en ce qu'il comprend des moyens (A2) pour déterminer l'orientation de l'émetteur à partir de la position ($X_{rj}$, $Y_{rj}$, $Z_{rj}$) et du secteur de visibilité ($\theta_{rj}$, $\phi_{rj}$, $\vec{\upsilon}_{rj}$) du récepteur, de la durée ($\Delta_{tj}$) et des données issues du circuit permettant d'identifier l'émetteur.

**13.** Dispositif selon l'une quelconque des revendications précédentes, caractérisé en ce que le récepteur ($D_j$) est un photodétecteur.

**14.** Dispositif d'émission de signaux impulsionnels comprenant au moins deux émetteurs de trains d'impulsions comprenant au moins une première impulsion, l'émetteur de train d'impulsions étant une source microlaser excitée par un signal de pompe, caractérisé en ce qu'il comprend des moyens ($CE_j$, $m_j$, r, $G_2$) pour mesurer la durée ($Td_{i1}$) qui sépare l'instant où la première impulsion d'un train d'impulsions est émise et l'instant où la source microlaser est excitée par le signal de pompe pour émettre la première impulsion.

**15.** Dispositif selon la revendication 14, caractérisé en ce que les moyens ($CE_i$, $m_i$, r, $G_2$) pour mesurer la durée ($Td_{i1}$) qui sépare l'instant où la première impulsion d'un train d'impulsions est émise et l'instant où la source microlaser est excitée par le signal de pompe comprennent un circuit de retard (r) du signal d'enveloppe du signal de pompe, un générateur d'impulsions ($G_2$) commandé par le signal d'enveloppe du signal de pompe retardé, et au moins un ensemble constitué d'un mélangeur ($m_i$) et d'un circuit de comptage ($Ce_i$), le mélangeur ($m_i$) recevant sur une première entrée le signal d'enveloppe du signal de pompe et sur une deuxième entrée un signal représentant la première impulsion du train d'impulsions, le signal issu du mélangeur ($m_i$) étant envoyé à une entrée du circuit de comptage permettant de déclencher le comptage du circuit de comptage ($CE_i$) et l'impulsion issue du générateur d'impulsions ($G_2$) étant envoyée à une entrée du circuit de comptage permettant d'arrêter le comptage.

FIG. 1

FIG. 2

EP 1 016 872 A1

FIG. 3

FIG. 4

FIG. 5

Office européen
des brevets

**RAPPORT DE RECHERCHE EUROPEENNE**

Numéro de la demande

EP 99 40 3301

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 3 817 620 A (TACHIBANA A ET AL) 18 juin 1974 (1974-06-18) * le document en entier * --- | 1,8 | G01S5/16 G04F10/00 |
| A | DE 43 27 937 A (VOLKSWAGENWERK AG) 23 février 1995 (1995-02-23) * le document en entier * --- | 1,8 | |
| A | FR 2 725 279 A (COMMISSARIAT ENERGIE ATOMIQUE) 5 avril 1996 (1996-04-05) * page 3, ligne 12 - page 7, ligne 3 * --- | 1,8 | |
| A,D | FR 2 745 668 A (COMMISSARIAT ENERGIE ATOMIQUE) 5 septembre 1997 (1997-09-05) * page 4, ligne 11 - page 7, ligne 8 * * page 16, ligne 19 - page 19, ligne 27 * --- | 1,8,14 | |
| A | EP 0 578 150 A (BODENSEEWERK GERAETETECH) 12 janvier 1994 (1994-01-12) * colonne 1, ligne 1 - ligne 54 * * colonne 4, ligne 41 - colonne 7, ligne 18 * ----- | 14 | |

**DOMAINES TECHNIQUES RECHERCHES (Int.Cl.7)**

G01S
G04F

Le présent rapport a été établi pour toutes les revendications

| Lieu de la recherche | Date d'achèvement de la recherche | Examinateur |
|---|---|---|
| LA HAYE | 11 avril 2000 | Roost, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.............................................................
& : membre de la même famille, document correspondant

EPO FORM 1503 03.82 (P04C02)

**EP 1 016 872 A1**

## ANNEXE AU RAPPORT DE RECHERCHE EUROPEENNE
## RELATIF A LA DEMANDE DE BREVET EUROPEEN NO.

EP 99 40 3301

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

11-04-2000

| Document brevet cité au rapport de recherche | | Date de publication | Membre(s) de la famille de brevet(s) | | Date de publication |
|---|---|---|---|---|---|
| US 3817620 | A | 18-06-1974 | JP | 48047856 A | 06-07-1973 |
| DE 4327937 | A | 23-02-1995 | AUCUN | | |
| FR 2725279 | A | 05-04-1996 | CA | 2159680 A | 05-04-1996 |
| | | | DE | 69514470 D | 17-02-2000 |
| | | | EP | 0706063 A | 10-04-1996 |
| | | | JP | 8122434 A | 17-05-1996 |
| | | | US | 5719664 A | 17-02-1998 |
| FR 2745668 | A | 05-09-1997 | CA | 2197399 A | 01-09-1997 |
| | | | EP | 0793153 A | 03-09-1997 |
| | | | US | 5912728 A | 15-06-1999 |
| EP 0578150 | A | 12-01-1994 | DE | 4222643 A | 13-01-1994 |
| | | | DE | 59309590 D | 24-06-1999 |

EPO FORM P0460

Pour tout renseignement concernant cette annexe : voir Journal Officiel de l'Office européen des brevets, No.12/82